# FASCICULE DE BREVET EUROPEEN

(11) **EP 2 773 676 B1**
(45) Date de publication et mention de la délivrance du brevet: **07.12.2016**
(21) Numéro de dépôt: 12775815.9
(22) Date de dépôt: 04.10.2012
(51) Int. Cl.: C08F 2/24, C08L 33/02, C08L 33/08, C08L 33/14, C09D 7/12, C09J 11/08

(54) **EPAISSISSANT ACRYLIQUE ASSOCIATIF CONTENANT DES POLYGLYCEROLS ET SON UTILISATION POUR AUGEMENTER LE TEMPS OUVERT DE FILMS MINCES OU EPAIS.**
ASSOZIATIVER ACRYLVERDICKER MIT POLYGLYCERINEN UND VERWENDUNG ZUR ERHÖHUNG DER OFFENZEIT VON DÜNN- ODER DICKSCHICHTEN
ACRYLIC ASSOCIATIVE THICKENER CONTAINING POLYGLYCEROLS AND THE USE OF SAME FOR INCREASING THE OPEN TIME OF THIN OR THICK FILMS

(30) Priorité: 04.11.2011 FR 1160004
(43) Date de publication de la demande: 10.09.2014
(73) Titulaire: COATEX, 69730 Genay (FR)
(72) Inventeur: RUHLMANN, Denis, F-69730 Genay (FR); SUAU, Jean-Marc, F-69480 Lucenay (FR)
(74) Mandataire: Balmefrezol, Ludovic Francis Pierre
(86) Numéro de dépôt international: PCT/FR2012/052252
(87) Numéro de publication internationale: WO 2013/064761

(56) Documents cités:
- EP-A2- 2 103 674
- DE-A1-102007 039 783
- Solvay Chemicals: "Polyglycerol-3", , XP002686977, Extrait de l'Internet: URL:http://www.solvaychemicals.com/EN/prod ucts/Polyglycerols/Polyglycerol-3.aspx [extrait le 2012-11-13]
- Solvay Chemicals: "Polyglycerol-4", , XP002686978, Extrait de l'Internet: URL:http://www.solvaychemicals.com/EN/prod ucts/Polyglycerols/Polyglycerol-4.aspx [extrait le 2012-11-13]

## Description

La présente invention se rapporte à de nouveaux épaississants associatifs acryliques qui, polymérisés en présence de polyglycérols particuliers, apportent au final une augmentation du temps ouvert de la peinture ou du revêtement épais dans lesquels ils sont incorporés. Ce faisant, les peintres et les applicateurs auront plus de temps pour travailler de façon progressive les couches de peinture ou corriger les imperfections telles que les gouttes de peintures, traces de pinceaux et de spatules.

Dans le domaine des revêtements en phase aqueuse, telles que les peintures à l'eau, le temps ouvert correspond à la période pendant laquelle le film de la peinture humide ou du revêtement épais, une fois appliqué sur une surface, peut être retravaillé ; il accepte alors des corrections, notamment à travers de nouvelles applications au rouleau, au pinceau ou à la spatule, sans pour autant faire apparaître au final des défauts de surface.

Dans toute la suite de la Demande, on parlera par abus de langage du temps ouvert d'une peinture, cette expression faisant référence au temps ouvert du film humide mince de ladite peinture, ou du film humide épais desdits enduits, crépis ou autres revêtements épais, après que ceux-ci ont été appliqués sur un support.

On comprend que dans les formulations de peintures aqueuses où l'évaporation de l'eau est un phénomène rapide (par rapport aux peintures contenant des solvants qui peuvent avoir des points d'ébullition élevés), la réduction du temps ouvert soit un enjeu d'importance.

A cet égard, des additifs spécifiques dits « augmentant le temps ouvert » (selon l'expression anglaise « open-time extenders ») ont été développés par l'homme du métier, les premiers d'entre eux étant l'éthylène glycol et des éthers de glycol, évoqués comme art antérieur dans « Development of low VOC additives to extend the wet edge and open time of aqueous coatings » (Progress in Organic Coatings, 2011, 72(1-2), pp. 102-108). Ces derniers présentent néanmoins l'inconvénient d'être des solvants que l'industrie des peintures aqueuses a décidé d'exclure pour se focaliser sur des formulations exemptes de COV.

Des cires naturelles ont également été développées (voir les documents WO 2001036550 A1, WO 2001036549 A1, WO 2008022828 A1 et WO 2009138304 A1) : mais elles nécessitent un procédé de mise en oeuvre plus complexe car elles doivent être fondues avant d'être incorporées dans la formulation de peinture ; en outre, s'il demeure des résidus insolubles, ceux-ci peuvent gravement affecter la stabilité de la composition finale de peinture.

Ce sont finalement des tensio-actifs qu'on privilégie aujourd'hui (voir les documents US 5,154,918 A1, US 2011091408 A1 et WO 2011 / 071510 A1) : faciles à mettre en oeuvre, il s'agit de composés exempts de COV qui permettent d'augmenter le temps ouvert des peintures aqueuses, notamment grâce aux effets de répulsion induits par leurs groupements hydrophobes entre les particules de latex, ce qui réduit d'autant le phénomène d'évaporation de l'eau dans le temps, augmentant conséquemment le temps ouvert du film de peinture humide (WO 2011/071510 A1).

Indépendamment de leurs performances, ces additifs « augmentant le temps ouvert » constituent un ingrédient supplémentaire de la formulation de peinture aqueuse : l'homme du métier est alors confronté aux problèmes de stockage et de manipulation liés à tout nouveau produit entrant dans sa formulation. De plus, il est bien connu que tout nouvel additif peut interagir avec les autres constituants de la formulation, et affecter certaines des propriétés finales du film de peinture. L'homme du métier doit alors éventuellement ajuster sa formulation, pour prendre en compte ces impacts négatifs.

Aussi a-t-on cherché à augmenter le temps ouvert des peintures, via des additifs rendus déjà indispensables dans ces formulations, mais connus pour apporter d'autres propriétés. C'est notamment le cas de produits particuliers dénommés «épaississants associatifs ».

Dans les peintures aqueuses, les épaississants permettent de maîtriser la rhéologie des formulations, tant au stade de leur fabrication, que pendant leur transport, leur stockage ou au cours de leur mise en oeuvre. La diversité des contraintes pratiques au niveau de chacune de ces étapes renvoie à une multiplicité de comportements rhéologiques différents.

On peut néanmoins résumer le besoin de l'homme du métier à l'obtention d'un effet d'épaississement d'une peinture aqueuse, tant pour des raisons de stabilité au cours du temps, que pour une possible application sur une surface verticale, l'absence d'éclaboussures au moment de la mise en oeuvre, etc... C'est pourquoi on a désigné les additifs qui contribuent à cette régulation du comportement rhéologique sous le terme d'épaississants.

Il est bien connu depuis de nombreuses années, que les épaississants naturels à base de cellulose du type HEC (hydroxy éthyl cellulose) contribuent à augmenter le temps ouvert. On pourra notamment se reporter, à titre d'exemple, aux fiches techniques des produits du type Natrosol™ commercialisés par la société Aqualon™. Cependant, la performance épaississante de ces produits n'est que modérée.

L'homme du métier s'est alors tourné vers les épaississants dits « associatifs ». Ce sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu.

Le mécanisme de fonctionnement et les caractéristiques des épaississants associatifs sont aujourd'hui bien connus et décrits par exemple dans les documents « Rheology modifiers for water-borne paints » (Surface Coatings Australia, 1985, pp. 6-10) et « Rheological modifiers for water-based paints : the most flexible tools for your formulations » (Eurocoat 97, UATCM, vol. 1, pp. 423-442).

Or, il est désormais avéré que certains épaississants associatifs permettent d'augmenter le temps ouvert des formulations de peinture dans lesquelles ils sont introduits (« Control of rheology of water-borne paints using associative thickeners », Progress in Organic Coatings (1999), 35(1-4), 171-181). Ce document enseigne qu'un épaississant associatif de nature polyuréthane ou HEUR (selon l'acronyme anglo-saxon Hydrophobically modified Ethylene oxyde URethane), ayant un poids moléculaire déterminé, permet effectivement d'augmenter le temps ouvert d'une peinture aqueuse.

Toutefois, les épaississants associatifs de type HEUR présentent l'inconvénient d'être insolubles dans l'eau, pour des extraits secs commercialement acceptables : on doit donc faire usage de tensio-actifs, ce qui complexifie leur mise en oeuvre. Aussi, l'homme du métier se toume-t-il logiquement vers l'autre grande classe d'épaississants associatifs de nature acrylique : les HASE (Hydrophobically Alkali Soluble Emulsion). Ces derniers peuvent être définis à partir des monomères qui les constituent : le premier est à base d'acide (méth)acrylique, le deuxième est un ester de cet acide, et le troisième est un monomère hydrophobe associatif. A titre d'exemples, on pourra citer notamment les demandes de brevet européennes EP 0 577 526 A1, EP 1 778 797 A1, EP 2 108 007 A1, EP 2 114 378 A1, EP 2 303 982 A1, et les demandes de brevet françaises FR 2 950 061 A1 et FR 2 956 862 A1.

Or, il n'existe à notre connaissance aucun procédé dans l'état de la technique, susceptible de conférer à des épaississants associatifs de type HASE une aptitude à augmenter le temps ouvert des formulations de peinture dans lesquelles ils sont incorporés. Poursuivant ses recherches dans cette direction, la Demanderesse a mis au point un nouveau procédé de fabrication d'épaississants de type HASE, faisant intervenir des polyglycérols en tant que « tensio-actifs de polymérisation ».

Cette dernière expression signifie que lesdits tensio-actifs sont mis en oeuvre pendant une des étapes de synthèse de l'épaississant associatif. Par opposition, des « tensio-actifs de formulation » sont utilisés après la polymérisation dudit épaississant, notamment pour mettre en oeuvre dans l'eau le produit fini obtenu après polymérisation.

Dans le cadre du procédé de fabrication des épaississants HASE selon l'invention, on montre que les produits résultants permettent d'augmenter sensiblement le temps ouvert d'une peinture. On dispose ainsi d'une solution résolvant le problème de l'augmentation du temps ouvert, sans passer par un additif supplémentaire qui engendre des contraintes logistiques. On s'affranchit des épaississants associatifs de type HEUR dont la formulation est plus contraignante pour atteindre des extraits secs commercialement intéressants, et on démontre qu'on obtient des temps ouverts équivalents à ceux obtenus avec un HEC, mais avec un pouvoir épaississant plus important.

La Demanderesse indique que la mise en oeuvre de tensio-actifs au cours de la polymérisation d'un épaississant associatif acrylique est déjà connue : elle est notamment décrite dans le document WO 2009 019225 A1. Par ailleurs, il est aussi déjà connu d'utiliser du glycérol pendant le même type de synthèse, comme divulgué dans le document WO 98 06757 A1. Néanmoins, rien ne décrivait ni ne suggérait que la mise en oeuvre de polyglycérols, comme tensio-actifs de polymérisation, était susceptible de conduire à de nouveaux épaississants associatifs de type HASE particulièrement efficaces pour développer du temps ouvert dans les peintures aqueuses.

Aussi, un premier objet de l'invention consiste-t-il en un procédé de fabrication d'un épaississant associatif par polymérisation, en dispersion aqueuse, en présence de tensio-actifs autres que les composés énumérés au point d) :
a) d'au moins un monomère qui est l'acide (méth)acrylique, préférentiellement l'acide méthacrylique,
b) d'au moins un monomère qui est un ester de l'acide (méth)acrylique, préférentiellement l'acrylate d'éthyle,
c) d'au moins un monomère possédant au moins un groupement hydrophobe,
caractérisé en ce qu'on met en oeuvre d) au moins un polyglycérol de formule (I) pendant ladite polymérisation 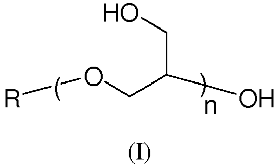 où n représente un nombre quelconque, entier ou décimal supérieur à 1 et égal ou inférieur à 10 et désigne le degré de polymérisation moyen ; R désigne l'hydrogène, un groupement ester fonctionnalisé par un groupe alkyle ayant de 8 à 22 atomes de carbone, ou un groupement alkyle ayant de 8 à 22 atomes de carbone et préférentiellement un groupement alkyle ayant de 8 à 22 atomes de carbone.

Ce procédé est aussi caractérisé en ce que on réalise une première étape d'introduction dans l'eau des composés d) et desdits tensio-actifs autres que les composés d), suivie d'une deuxième étape de montée en température du milieu, suivie d'une troisième étape d'introduction des initiateurs de polymérisation, puis des monomères éventuellement ajoutés en combinaison avec de l'eau et des tensio-actifs autre que les composés d).

Ce procédé est aussi caractérisé en ce que les tensio-actifs autres que les composés d) sont choisis parmi les tensio-actifs anioniques et préférentiellement parmi le dodécyl sulfate de sodium, le di octyl sulfosuccinate de sodium, le dodécyl benzène sulfonate de sodium, les tensio-actifs non ioniques et préférentiellement les éthers d'alcools gras et de polyoxyéthylèneglycol, les esters de polyoxyéthylèneglycol et les mélanges de ces tensio-actifs.

Ce procédé est aussi caractérisé en ce que le % massique tensio-actifs autres que d) / polymère est compris entre 1 % et 5 %.

Ce procédé est aussi caractérisé en ce que ladite polymérisation met en oeuvre, en % en poids, par rapport au poids total dudit épaississant associatif :
a) de 20 % à 60 % en poids d'au moins un monomère qui est l'acide (méth)acrylique, préférentiellement l'acide méthacrylique,
b) de 40 % à 80 % d'au moins un monomère qui est un ester de l'acide (méth)acrylique, préférentiellement l'acrylate d'éthyle,
c) de 0,5 % à 25 % d'au moins un monomère possédant au moins un groupement hydrophobe,
d) de 0,1 % à 10 % en poids d'au moins un polyglycérol de formule (I), 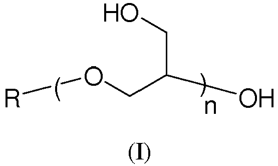
où n représente un nombre quelconque, entier ou décimal supérieur à 1 et égal ou inférieur à 10 et désigne le degré de polymérisation moyen ; R désigne l'hydrogène, un groupement ester fonctionnalisé par un groupe alkyle ayant de 8 à 22 atomes de carbone ou un groupement alkyle ayant de 8 à 22 atomes de carbone, et préférentiellement un groupement alkyle ayant de 8 à 22 atomes de carbone,
la somme des pourcentages a), b), c) et d) étant égale à 100 %.

Ce procédé est aussi caractérisé en ce que le monomère contenant au moins un groupement hydrophobe possède la formule générale R - (OE)ₚ - (OP)_{q} - R', avec :
- p et q désignant des entiers inférieurs ou égaux à 150 dont l'un au moins est non nul, avec préférentiellement q = 0 et 0 < p < 80,
- OE et OP désignant respectivement l'oxyde d'éthylène et l'oxyde de propylène, disposés de manière aléatoire ou de manière régulière.
- R désignant une fonction polymérisable, et préférentiellement la fonction méthacrylate ou méthacryluréthane,
- R' désignant un groupement hydrophobe comportant au moins 6 et au plus 36 atomes de carbone.

Ce procédé est aussi caractérisé en ce que ledit épaississant associatif présente une masse moléculaire moyenne en poids comprise entre 20 000 g/mol et 1 000 000 g/mol, telle que mesurée par GPC.

Un autre objet de la présente invention réside dans un épaississant associatif, tel qu'obtenu par le procédé selon la présente invention.

Un autre objet de la présente invention consiste en l'utilisation d'un tel épaississant, comme agent améliorant le temps ouvert d'une formulation aqueuse ou d'un adhésif, ladite formulation aqueuse étant préférentiellement une peinture aqueuse, un crépi ou un enduit.

Un autre objet réside dans l'utilisation du polyglycerol de formule (I) comme tensio-actifs de polymerisation.

Un dernier objet de la présente invention réside dans la formulation aqueuse ou l'adhésif contenant ledit épaississant, ladite formulation aqueuse étant préférentiellement une peinture aqueuse, un crépi ou un enduit.

Les exemples qui suivent permettent de mieux appréhender la présente invention, sans pourtant en limiter la portée.

### EXEMPLES

Dans chacun des exemples suivants, la masse moléculaire des épaississants associatifs est déterminée par GPC.

La synthèse desdits épaississants est bien connue de l'homme du métier, et on pourra notamment se reporter aux différents documents cités dans la Demande comme arrière-plan sur la technologie des HASE.

Les peintures sont formulées selon les méthodes bien connues de l'homme du métier. Toutes les viscosités Brookfield™ des formulations de peinture sont mesurées à 25°C.

Enfin, le temps ouvert des peintures est déterminé selon 2 techniques, selon que l'on applique un film mince ou un film épais de peinture humide.

Lorsqu'il s'agit d'un film mince, le temps ouvert est mesuré à partir d'un test réalisé en atmosphère contrôlée (salle climatisée), où on détermine sur un film fraîchement appliqué, par des reprises successives, le temps où l'on ne détrempe plus la première couche.

Concrètement, dans une salle climatisée à 23 ± 1°C et à 50 % d'humidité relative, on applique à l'aide d'un applicateur multicouche sur une carte Leneta noire (carte d'abrasion humide) 240 µm d'une peinture ayant au moins 24 h de mûrissement. On déclenche alors le chronomètre puis on scotche verticalement cette carte sur une plaque de Placoplatre™ ; on s'assure que la longueur du ruban adhésif est égale à la largeur de la carte.

Au bout de 15 min avec une brosse « 30 » on commence à balayer la surface du film encore humide de gauche à droite sur une bande de 3 cm ; on déplace ainsi avec la brosse une partie de la peinture sur la surface non peinte à droite.

On effectue cette opération toutes les minutes en veillant bien d'utiliser une brosse toujours sèche et d'appliquer toujours la même pression.

On arrête le balayage lorsqu'on ne peut plus déplacer de peinture vers la droite. Dès lors, la carte Leneta bouge au passage de la brosse : c'est le moment où le film ne peut plus se détremper ; par conséquent la brosse ne glisse plus. Cet instant correspond au temps ouvert.

Lorsqu'il s'agit d'un film épais, le temps ouvert est déterminé de manière indirecte à travers un test d'étalement.

Dans une salle climatisée à 23 ± 1°C et à hygrométrie contrôlée à 50 ± 5 % on applique, à l'aide d'un gabarit, une quantité déterminée en forme et en volume de produit à tester sur une plaque de Placoplatre™.

Ce gabarit consiste en un cadre (sans fond) en inox de forme trapézoïdale d'épaisseur allant de 0 à 14 mm, avec une grande base B = 72 mm, une petite base b = 58 mm et une hauteur h = 150 mm. La profondeur est de 0 mm pour B et de 14 mm pour b et varie linéairement. Ce gabarit est fixé sur la plaque de Placoplatre™, la grande base en haut.

On incorpore le produit à l'intérieur de façon à remplir totalement le gabarit. Le surplus de produit est enlevé par arasement à l'aide d'un couteau à enduire de largeur supérieure à B, de manière à positionner parfaitement le produit et à ce qu'il épouse parfaitement la forme du gabarit.

On retire alors celui-ci (démoulage) en prenant soin de ne rien laisser sur les bords du cadre. Le produit s'affaisse plus ou moins largement au cours du temps de séchage. La mesure de l'amplitude de l'étalement est faite à l'endroit le plus large 24 heures après application. Elle est exprimée en pourcentage de part supplémentaire d'étalement par rapport à la largeur du gabarit. On considère que plus grande est l'amplitude et plus grand est le temps ouvert du film épais.

### Exemple 1

Cet exemple illustre la synthèse et l'utilisation de différents épaississants associatifs, selon l'invention (présence de polyglycérol au cours de la synthèse), ou hors invention (sans additif, avec du glycérol mis en oeuvre pendant la synthèse ou comme agent de formulation, avec du polyglycérol ajouté comme tensio-actif de formulation).

L'utilisation en question a lieu dans une peinture aqueuse, dont la constitution est donnée dans le tableau 1, les chiffres indiquant la masse en gramme de chaque constituant.

**Tableau 1**

| | |
|---|---|
| Eau | 294,0 |
| Ammoniaque 31 % | 2,0 |
| Ecodis 40 (Coatex™) | 3,0 |
| Acticide MBS (Thor™) | 2,0 |
| Byk™ 34 (Byk™) | 1,0 |
| TiONA™ 568 (Cristal™) | 41,0 |
| Durcal 5 (Omya™) | 328,0 |
| Omyacoat™ 850 OG (Omya™) | 215,0 |
| Axilat™ DS 910 (Hexion™) | 82,0 |
| Butyl diglycol | 20,0 |
| Epaississant à tester | 12,0* |

| | |
|---|---|
| * les 12 grammes correspondent à la masse d'une émulsion contenant 30 % en poids sec de polymère (à l'exception de l'essai n° 4 qui met en oeuvre 9,0 grammes en poids sec d'un épaississant commercial sous forme de poudre). | |

### Essai n° 1

Cet essai illustre un épaississant HASE hors invention, polymérisé avec un tensio-actif classique.

Cet épaississant résulte de la synthèse de, exprimé en % en poids des monomères :
a) 37,4 % d'acide méthacrylique,
b) 54,3 % d'acrylate d'éthyle,
c) 8,3 % d'un monomère de formule (I) avec :
   R désignant la fonction méthacrylate,
   q = 0, p = 25,
   R' désignant le groupement hydrophobe issu de l'alcool oxo ayant 16 atomes de carbone.

Dans un réacteur de 1 litre on pèse 485,4 grammes d'eau bi permutée et 6,66 grammes de dodécyl sulfate de sodium et 11,5 g de tensio-actif non ionique qui est l'alcool isotridécylique condensé avec 3 molécules d'oxyde d'éthylène. On chauffe en pied de cuve à 72°C ± 2°C.

Pendant ce temps, on prépare une pré émulsion, en pesant dans un bécher :
- 149 grammes d'eau bi permutée,
- 2,33 grammes de dodécyl sulfate de sodium,
- 111,33 grammes d'acide méthacrylique,
- 161,45 grammes d'acrylate d'éthyle,
- 24,6 grammes de macromonomère de formule (I).

La masse de tensio-actif non-ionique représente donc ici 3,7 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre la dispersion ainsi obtenue.

### Essai n° 2

Cet essai illustre un épaississant HASE hors invention, polymérisé avec un tensio-actif classique.

Il s'agit du même épaississant que celui de l'essai n° 1, dans lequel on a remplacé, en masse, le tensio-actif non-ionique par du nonyl phénol condensé avec 4 molécules d'oxyde d'éthylène.

### Essai n° 3

Cet essai illustre un épaississant HASE hors invention, polymérisé avec un tensio-actif classique.

Il s'agit du même épaississant que celui de l'essai n° 1, dans lequel on a remplacé, en masse, le tensio-actif non-ionique par un tensio-actif commercialisé par la société Clariant™ sous le nom de Polyglykol™ B11/150

### Essai n° 4

Cet essai illustre un épaississant de type HEC hors invention qui est le Natrosol™ 250 HR (Aqualon™) ; il sert de référence.

### Essai n° 5

Cet essai illustre un épaississant hors invention, formulé dans l'eau avec introduction de glycérol après polymérisation.

L'épaississant est celui de l'essai n° 1, polymérisé selon la technique décrite dans l'essai n° 1.

Dans la solution finale à 30 % en poids sec de matière active, on introduit 3 % en poids sec de glycérol provenant de la société Oleon™ par rapport au poids sec de polymère.

### Essai n° 6

Cet essai illustre un épaississant hors invention, formulé dans l'eau avec introduction de polyglycérol après polymérisation.

L'épaississant est celui de l'essai n° 1, polymérisé selon la technique décrite dans l'essai n° 1.

Dans la solution finale à 30 % en poids sec de matière active, on introduit 3 % en poids sec, par rapport au poids sec de polymère, de polyglycérol-3 de formule (I) avec R = H, et n = 3 commercialisé par la société Solvay™.

### Essai n° 7

Cet essai illustre un épaississant hors invention, formulé dans l'eau avec introduction de polyglycérol après polymérisation.

L'épaississant est celui de l'essai n° 1, polymérisé selon la technique décrite dans l'essai n° 1.

Dans la solution finale à 30 % en poids sec de matière active, on introduit 3 % en poids sec, par rapport au poids sec de polymère, de polyglycérol hydrophobé qui est le Chimexane™ NB de formule (I) avec R = C₁₈H₃₅ et n = 2 commercialisé par la société Chimex™.

### Essai n° 8

Cet essai illustre un épaississant hors invention, polymérisé en présence de glycérol. L'épaississant est celui de l'essai n° 1, polymérisé selon la technique décrite dans l'essai n° 1, à la différence qu'on a substitué, en masse, le tensio-actif non-ionique de polymérisation par du glycérol provenant de la société Oleon™.

### Essai n° 9

Cet essai illustre un épaississant selon l'invention, polymérisé en présence du polyglycérol-3, qui est celui mis en oeuvre au cours de l'essai n° 6.

L'épaississant est celui de l'essai n° 1, polymérisé selon la technique décrite dans l'essai n° 1, à la différence qu'on a substitué, en masse, le tensio-actif non-ionique de polymérisation par le polyglycérol-3 de l'essai n° 6.

### Essai n° 10

Cet essai illustre un épaississant selon l'invention, polymérisé en présence du Chimexane™ NB, qui est celui mis en oeuvre au cours de l'essai n° 7.

L'épaississant est celui de l'essai n° 1, polymérisé selon la technique décrite dans l'essai n° 1, à la différence qu'on a substitué, en masse, le tensio-actif non-ionique de polymérisation par le Chimexane™ NB de l'essai n° 7.

Pour chacun des essais, on a déterminé les viscosités Brookfield™, à 25°C, à 10 et 100 tours / min, à l'instant t = 1 jour (µ_{10 1J}, µ_{100 1J}), l'instant t = 0 correspondant au moment de la fabrication de la peinture.

On a également déterminé le temps ouvert de la peinture exprimé en minutes selon le protocole énoncé en préambule pour un film mince, à l'instant t = 1 jour.

Les résultats apparaissent dans le tableau 2.

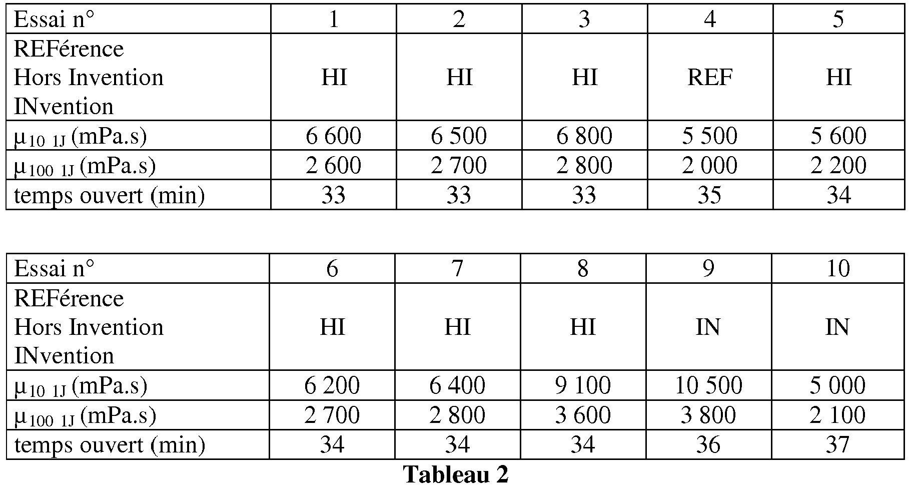

Les essais n° 1 à 3 démontrent que le choix d'un tensio-actif habituel de polymérisation n'a pas d'influence sur le temps ouvert.

Lorsque le glycérol ou des polyglycérols sont utilisés comme tensio-actif de formulation (essais n° 5 à 8), l'influence est minime sur le temps ouvert.

L'essai n° 4 démontre qu'une cellulose modifiée permet en effet d'augmenter le temps ouvert ; il faut toutefois en utiliser une masse importante (9 grammes de produit actif par rapport aux 3,6 grammes de produit actif des 12 grammes d'émulsion à 30 % d'extrait sec) pour obtenir des niveaux de viscosités comparables à ceux obtenus avec les émulsions de type HASE.

Seuls les essais n° 9 et 10 (mise en oeuvre de polyglycérols pendant l'étape de polymérisation) conduisent à une augmentation significative du temps ouvert, avec une efficacité épaississante conservée. Le temps ouvert le plus important est obtenu pour l'essai n° 10 correspondant à la variante préférentielle de l'invention.

### Exemple 2

Cet exemple illustre la synthèse et l'utilisation de différents épaississants associatifs, selon l'invention (présence de polyglycérol au cours de la synthèse), ou hors invention (sans ajout de polyglycérol pendant la synthèse).

L'utilisation a lieu dans une peinture aqueuse dont la constitution est donnée dans le tableau 3, les chiffres indiquant la masse en gramme de chaque constituant.

**Tableau 3**

| | |
|---|---|
| Eau | 281,0 |
| Ammoniaque 31 % | 2,0 |
| Ecodis 40 (Coatex™) | 3,0 |
| Acticide MBS (Thor™) | 2,0 |
| Byk™ 34 (Byk™) | 1,0 |
| TiONA 568 (Cristal™) | 41,0 |
| Durcal 5 (Omya™) | 328,0 |
| Omyacoat™ 850 OG (Omya™) | 215,0 |
| Axilat™ DS 910 (Hexion™) | 82,0 |
| Butyl diglycol | 20,0 |
| Epaississant à tester | 24,0 * |

| | |
|---|---|
| * les 24 grammes correspondent à la masse d'une émulsion contenant 30 % en poids sec de polymère | |

### Essai n° 11

Cet essai illustre un épaississant HASE hors invention, polymérisé avec un tensio-actif classique.

Cet épaississant résulte de la synthèse de, exprimé en % en poids des monomères :
a) 33,7 % d'acide méthacrylique,
b) 59,4 % d'acrylate d'éthyle,
c) 6,9 % d'un monomère de formule (I) avec :
   R désignant la fonction méthacrylate,
   q = 0, p = 25,
   R' désignant le groupement hydrophobe ramifié en 16 atomes de carbone.

Dans un réacteur de 1 litre on pèse 288 grammes d'eau bi permutée, 3,5 grammes de dodécyl sulfate de sodium et 11,5 g de tensio-actif non ionique qui est l'alcool isotridécylique condensé avec 3 molécules d'oxyde d'éthylène. On chauffe en pied de cuve à 72°C ± 2°C.

Pendant ce temps, on prépare une pré émulsion, en pesant dans un bécher :
- 285 grammes d'eau bi permutée,
- 3,5 grammes de dodécyl sulfate de sodium,
- 102,06 grammes d'acide méthacrylique,
- 180 grammes d'acrylate d'éthyle,
- 21 grammes de macromonomère de formule (I),
- 0,64 gramme de dodecyl mercaptan.

La masse de tensio-actif non-ionique représente donc ici 3,6 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre la dispersion ainsi obtenue.

### Essai n° 12

Cet essai illustre un épaississant selon l'invention, polymérisé en présence du polyglycérol-4 commercialisé par la société Solvay™.

L'épaississant est celui de l'essai n° 11, polymérisé selon la technique décrite dans l'essai n° 11, à la différence qu'on a substitué, en masse, le tensio-actif non-ionique de polymérisation par le polyglycérol-4 de l'essai n°6.

### Essai n° 13

Cet essai illustre un épaississant selon l'invention, polymérisé en présence du Chimexane™ NB.

L'épaississant est celui de l'essai n° 11, polymérisé selon la technique décrite dans l'essai n° 11, à la différence qu'on a substitué, en masse, le tensio-actif de polymérisation par le Chimexane™ NB.

### Essai n° 14

Cet essai illustre un épaississant HASE hors invention, polymérisé avec un tensio-actif classique.

Cet épaississant résulte de la synthèse de, exprimé en % en poids des monomères :
a) 35,57 % d'acide méthacrylique,
b) 52,43 % d'acrylate d'éthyle,
c) 12 % d'un monomère de formule (I) avec :
   R désignant la fonction méthacrylate,
   q = 0, p = 30,
   R' désignant le groupement hydrophobe constitué de 12 atomes de carbones et issu de l'éthoxylation d'un alcool oxo constitué de 12 atomes de carbones.

Dans un réacteur de 1 litre on pèse 485,4 grammes d'eau bi permutée et 6,66 grammes de dodécyl sulfate de sodium et 11,5 g d'un tensio-actif commercialisé par la société Clariant™ sous le nom de Polyglykol™ B11/150. On chauffe en pied de cuve à 72°C ± 2°C.

Pendant ce temps, on prépare une pré émulsion, en pesant dans un bécher :
- 149 grammes d'eau bi permutée,
- 0,33 gramme de dodécyl sulfate de sodium,
- 105,8 grammes d'acide méthacrylique,
- 155,9 grammes d'acrylate d'éthyle,
- 35,7 grammes de macromonomère de formule (I).

La masse de tensio-actif représente donc ici 3,7 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre la dispersion ainsi obtenue.

### Essai n° 15

Cet essai illustre un épaississant selon l'invention, polymérisé en présence de polyglycérol-4 de la société Solvay™.

L'épaississant est celui de l'essai n° 14, polymérisé selon la technique décrite dans l'essai n° 14, à la différence qu'on a substitué, en masse, le tensio-actif non-ionique de polymérisation par du polyglycérol-4.

### Essai n° 16

Cet essai illustre un épaississant selon l'invention, polymérisé en présence du Chimexane™ NB commercialisé par la société Chimex™.

L'épaississant est celui de l'essai n° 14, polymérisé selon la technique décrite dans l'essai n° 14, à la différence qu'on a substitué, en masse, le tensio-actif non-ionique de polymérisation par le Chimexane™ NB.

Pour chacun des essais, on a déterminé les viscosités Brookfield™, à 25°C, à 10 et 100 tours / min, à l'instant t = 1 jour (µ_{10 1J}, µ_{100 1J}), l'instant t = 0 correspondant au moment de la fabrication de la peinture.

On a également déterminé le temps ouvert de la peinture exprimé en minutes selon le protocole énoncé en préambule pour un film mince, à l'instant t = 1 jour.

Les résultats apparaissent dans le tableau 4.

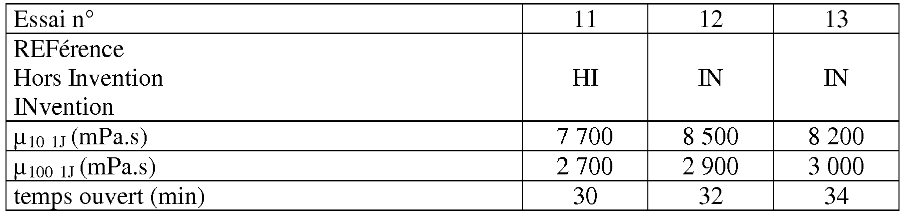

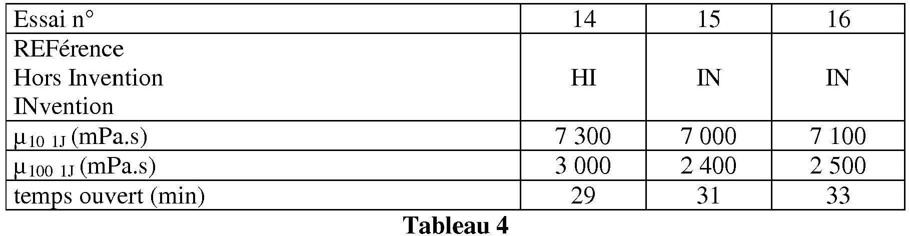

Si on compare les essais n° 12 et 13 à l'essai n° 11, et les essais n° 15 et 16 à l'essai n° 14, on vérifie que la mise en oeuvre de polyglycérols selon l'invention, pendant l'étape de polymérisation, permet d'augmenter sensiblement le temps ouvert, sans affecter le pouvoir épaississant.

Les temps ouverts les plus importants sont obtenus pour les essais n° 13 et 16 qui correspondent à la variante préférentielle de l'invention.

### Exemple 3

Cet exemple illustre la synthèse et l'utilisation de différents épaississants associatifs, selon l'invention (présence de polyglycérol au cours de la synthèse), ou hors invention (sans ajout de polyglycérol pendant la synthèse).

L'utilisation en question a lieu dans un revêtement épais aqueux dont la constitution est donnée dans le tableau 5, les chiffres indiquant la masse en gramme de chaque constituant.

**Tableau 5**

| | |
|---|---|
| Eau | 258,5 |
| Ammoniaque 31 % | 2,5 |
| Ecodis 40 (Coatex™) | 3,0 |
| Mergal K6N | 2,0 |
| Nopco™ NDW | 1,0 |
| Durcal 130 (Omya™) | 380,0 |
| Durcal 2 (Omya™) | 200,0 |
| Axilat™ DS 910 (Hexion™) | 40,0 |
| Epaississant à tester | 14,0* |

| | |
|---|---|
| * les 14 grammes correspondent à la masse d'une émulsion contenant 30 % en poids sec de polymère (à l'exception de l'essai n° 18 mettant en oeuvre 9,0 grammes de Natrosol sous forme de poudre) | |

### Essai n° 17

Cet essai illustre un épaississant HASE hors invention, polymérisé avec un tensio-actif classique.

Cet épaississant résulte de la synthèse de, exprimé en % en poids des monomères :
a) 37,1 % d'acide méthacrylique,
b) 52,9 % d'acrylate d'éthyle,
c) 10 % d'un monomère de formule (I) avec :
   R désignant la fonction méthacrylate,
   q = 0, p = 35,
   R' désignant le groupement hydrophobe ramifié comportant 20 atomes de carbones.

Dans un réacteur de 1 litre on pèse 473,55 grammes d'eau bi permutée et 4,42 grammes de dodécyl sulfate de sodium et 11 g de tensio-actif non ionique qui est l'alcool isotridécylique condensé avec 3 molécules d'oxyde d'éthylène. On chauffe en pied de cuve à 72°C ± 2°C.

Pendant ce temps, on prépare une pré émulsion, en pesant dans un bécher :
- 116 grammes d'eau bi permutée,
- 108,14 grammes d'acide méthacrylique,
- 153,75 grammes d'acrylate d'éthyle,
- 29 grammes de macromonomère de formule (I).

La masse de tensio-actif non-ionique représente donc ici 3,6 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre la dispersion ainsi obtenue.

### Essai n° 18

Cet essai illustre un épaississant de type HEC hors invention qui est le Natrosol™ 250 HR (Aqualon™) ; il sert de référence.

### Essai n° 19

Cet essai illustre un épaississant selon l'invention, polymérisé en présence de Chimexane™ NB commercialisé par la société Chimex™.

L'épaississant est celui de l'essai n° 17, polymérisé selon la technique décrite dans l'essai n° 17, à la différence qu'on a substitué, en masse, le tensio-actif non-ionique de polymérisation par le Chimexane™ NB.

### Essai n° 20

Cet essai illustre un épaississant selon l'invention, polymérisé en présence de Chimexane™ NC commercialisé par la société Chimex™.

L'épaississant est celui de l'essai n° 17, polymérisé selon la technique décrite dans l'essai n° 17, à la différence qu'on a substitué, en masse, le tensio-actif non-ionique de polymérisation par le Chimexane™ NC de formule (I) avec R = C₁₈H₃₅ et n = 4.

### Essai n° 21

Cet essai illustre un épaississant selon l'invention, polymérisé en présence de Chimexane™ NB commercialisé par la société Chimex™.

L'épaississant est celui de l'essai n° 17, polymérisé selon la technique décrite dans l'essai n° 17, à la différence qu'on a substitué (2 fois la masse) le tensio-actif de polymérisation par le Chimexane™ NB.

Pour chacun des essais, on a déterminé les viscosités Brookfield™, à 25°C, à 10 et 100 tours / min, à l'instant t = 1 jour (µ_{10 1J}, µ_{100 1J}), l'instant t = 0 correspondant au moment de la fabrication du revêtement épais.

On a également déterminé le temps ouvert du revêtement épais selon le protocole énoncé en préambule pour un film épais, à l'instant t = 1 jour.

Les résultats apparaissent dans le tableau 6.

**Tableau 6**

| Essai n° | 17 | 18 | 19 | 20 | 21 |
|---|---|---|---|---|---|
| REFérence Hors Invention INvention | HI | REF | IN | IN | IN |
| µ_{10 1J} (Pa.s) | 109 | 83 | 103 | 88 | 112 |
| µ_{100 1J} (Pa.s) | 27 | 30 | 26 | 23 | 30 |
| temps ouvert (allongement %) | 60 | 120 | 103 | 95 | 122 |

Ces résultats démontrent que les épaississants selon l'invention (essais n° 19 à 21) permettent d'augmenter le temps ouvert, par rapport à la référence, tout en conservant un bon pouvoir épaississant.

L'essai n° 21 permet même d'améliorer le temps ouvert, tel qu'obtenu avec le produit de référence selon l'essai n° 18 (mais avec seulement 4,2 grammes de produit actif, contre 9,0 grammes pour le produit de type HEC).

## Revendications

1. Procédé de fabrication d'un épaississant associatif par polymérisation, en dispersion aqueuse, en présence de tensio-actifs autres que les composés énumérés au point d) :
a) d'au moins un monomère qui est l'acide (méth)acrylique, préférentiellement l'acide méthacrylique,
b) d'au moins un monomère qui est un ester de l'acide (méth)acrylique, préférentiellement l'acrylate d'éthyle,
c) d'au moins un monomère possédant au moins un groupement hydrophobe, de formule générale R - (OE)ₚ - (OP)_{q} - R', avec :
- p et q désignant des entiers inférieurs ou égaux à 150 dont l'un au moins est non nul, avec préférentiellement q = 0 et 0 < p < 80,
- OE et OP désignant respectivement l'oxyde d'éthylène et l'oxyde de propylène,
- R désignant une fonction polymérisable, et préférentiellement la fonction méthacrylate ou méthacryluréthane,
- R' désignant un groupement hydrophobe comportant au moins 6 et au plus 36 atomes de carbone,
**caractérisé en ce qu'**on met en oeuvre d) au moins un polyglycérol de formule (I) pendant ladite polymérisation 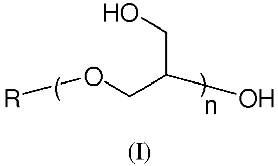
où n représente un nombre quelconque, entier ou décimal supérieur à 1 et égal ou inférieur à 10 et désigne le degré de polymérisation moyen ; R désigne l'hydrogène, un groupement ester fonctionnalisé par un groupe alkyle ayant de 8 à 22 atomes de carbone, ou un groupement alkyle ayant de 8 à 22 atomes de carbone, et préférentiellement un groupement alkyle ayant de 8 à 22 atomes de carbone.

2. Procédé selon la revendication 1 **caractérisé en ce que** on réalise une première étape d'introduction dans l'eau des composés d) et desdits tensio-actifs autres que les composés d), suivie d'une deuxième étape de montée en température du milieu, suivie d'une troisième étape d'introduction des initiateurs de polymérisation, puis des monomères éventuellement ajoutés en combinaison avec de l'eau et des tensio-actifs autre que les composés d).

3. Procédé selon une des revendications 1 ou 2 **caractérisé en ce que** les tensio-actifs autres que les composés d) sont choisis parmi les tensio-actifs anioniques et préférentiellement parmi le dodécyl sulfate de sodium, le di octyl sulfosuccinate de sodium, le dodécyl benzène sulfonate de sodium, les tensio-actifs non ioniques et préférentiellement les éthers d'alcools gras et de polyoxyéthylèneglycol, les esters de polyoxyéthylèneglycol et les mélanges de ces tensio-actifs.

4. Procédé selon une des revendications 1 à 3 **caractérisé en ce que** le % massique tensio-actifs autres que d) / polymère est compris entre 1 % et 5 %.

5. Procédé selon une des revendications 1 à 4 **caractérisé en ce que** ladite polymérisation met en oeuvre, en % en poids, par rapport au poids total dudit épaississant associatif :
a) de 20 % à 60 % en poids d'au moins un monomère qui est l'acide (méth)acrylique, préférentiellement l'acide méthacrylique,
b) de 40 % à 80 % d'au moins un monomère qui est un ester de l'acide (méth)acrylique, préférentiellement l'acrylate d'éthyle,
c) de 0,5 % à 25 % dudit au moins un monomère possédant au moins un groupement hydrophobe,
d) de 0,1 % à 10 % en poids d'au moins un polyglycérol de formule (I), 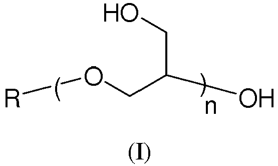
où n représente un nombre quelconque, entier ou décimal supérieur à 1 et égal ou inférieur à 10 et désigne le degré de polymérisation moyen ; R désigne l'hydrogène, un groupement ester fonctionnalisé par un groupe alkyle ayant de 8 à 22 atomes de carbone, ou un groupement alkyle ayant de 8 à 22 atomes de carbone, et préférentiellement un groupement alkyle ayant de 8 à 22 atomes de carbone,
la somme des pourcentages a), b), c) et d) étant égale à 100 %.

6. Procédé selon une des revendications 1 à 5 selon lequel R' désigne un groupement hydrophobe comportant entre 12 et 36 atomes de carbone.

7. Procédé selon une des revendications 1 à 6 **caractérisé en ce que** ledit épaississant associatif présente une masse moléculaire moyenne en poids comprise entre 20 000 g/mol et 1 000 000 g/mol, telle que mesurée par GPC.

8. Epaississant associatif, tel qu'obtenu par le procédé selon une des revendications 1 à 7.

9. Utilisation de l'épaississant selon la revendication 8, comme agent améliorant le temps ouvert d'une formulation aqueuse ou d'un adhésif, ladite formulation aqueuse étant préférentiellement une peinture aqueuse, un crépi ou un enduit.

10. Formulation aqueuse ou adhésif contenant l'épaississant selon la revendication 9, ladite formulation aqueuse étant préférentiellement une peinture aqueuse, un crépi ou un enduit.

11. Utilisation du polyglycérol de formule (I) comme agent tensio actif de polymerisation.

## Patentansprüche

1. Verfahren zur Herstellung eines assoziativen Verdickungsmittels, indem in wässriger Dispersion, in Gegenwart von Tensiden, die nicht den unter Punkt d) aufgelisteten Verbindungen entsprechen, Folgendes zur Polymerisarion gebracht wird:
a) mindestens ein Monomer, bei dem es sich um (Meth)acrylsäure handelt, vorzugsweise um Methacrylsäure,
b) mindestens ein Monomer, bei dem es sich um einen (Meth)acrylsäureester handelt, vorzugsweise um Ethylacrylat,
c) mindestens ein Monomer, das mindestens eine hydrophobe Gruppe der allgemeinen Formel
R - (OE)ₚ - (OP)_{q} - R'
besitzt, wobei
- p und q ganze Zahlen bezeichnen, die kleiner oder gleich 150 sind, wobei mindestens eine davon von null verschieden ist, wobei vorzugsweise q = 0 und 0 < p < 80 ist,
- OE und OP Ethylenoxid beziehungsweise Propylenoxid bezeichnen,
- R eine polymerisierbare funktionelle Gruppe bezeichnet, und zwar vorzugsweise die funktionelle Methacrylat- oder Methacrylurethangruppe,
- R' eine hydrophobe Gruppe bezeichnet, die mindestens 6 und höchstens 36 Kohlenstoffatome aufweist,
**dadurch gekennzeichnet, dass** während der Polymerisarion d) mindestens ein Polyglycerin der Formel (I) eingesetzt wird 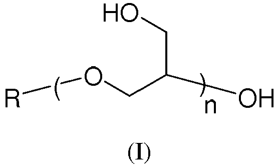 wobei n für eine beliebige ganze Zahl oder Dezimalzahl steht, die größer als 1 und kleiner oder gleich 10 ist, wobei sie den mittleren Polymerisationsgrad bezeichnet; R für Wasserstoff, eine Estergruppe, die durch eine Alkylgruppe mit 8 bis 22 Kohlenstoffatomen funktionalisiert ist, oder eine Alkylgruppe mit 8 bis 22 Kohlenstoffatomen steht, und zwar vorzugsweise für eine Alkylgruppe mit 8 bis 22 Kohlenstoffatomen.

2. Verfahren nach Anspruch 1, **dadurch gekennzeichnet, dass** ein erster Schritt durchgeführt wird, in welchem die Verbindungen d) und die Tenside, welche nicht den Verbindungen d) entsprechen, in Wasser eingetragen werden, gefolgt von einem zweiten Schritt, in welchem das Medium erwärmt wird, worauf in einem dritten Schritt zunächst die Polymerisationsinitiatoren und dann die Monomere zugesetzt werden, Letztere möglicherweise in Kombination mit Wasser und den Tensiden, welche nicht den Verbindungen d) entsprechen.

3. Verfahren nach einem der Ansprüche 1 oder 2, **dadurch gekennzeichnet, dass** die Tenside, welche nicht den Verbindungen d) entsprechen, aus den anionischen Tensiden, und zwar vorzugsweise aus Natriumdodecylsulfat, Natriumdioctylsulfosuccinat, Natriumdodecylbenzolsulfonat, aus den nichtionischen Tensiden, und zwar vorzugsweise den Ethern von Fettalkoholen und Polyoxyethylenglykol, den Estern von Polyoxyethylenglykol, sowie den Mischungen dieser Tenside ausgewählt sind.

4. Verfahren nach einem der Ansprüche 1 bis 3, **dadurch gekennzeichnet, dass** der %-Anteil nach Masse der Tenside, welche nicht d) entsprechen, / Polymer im Bereich von 1 % bis 5 % liegt.

5. Verfahren nach einem beliebigen der Ansprüche 1 bis 4, **dadurch gekennzeichnet, dass** bei der Polymerisation, in Gewichts-%, unter Bezugnahme auf das Gesamtgewicht des assoziativen Verdickungsmittels, Folgendes eingesetzt wird:
a) 20 % bis 60 % nach Gewicht mindestens eines Monomers, bei dem es sich um (Meth)acrylsäure handelt, vorzugsweise um Methacrylsäure,
b) 40 % bis 80 % mindestens eines Monomers, bei dem es sich um einen (Meth)acrylsäureester handelt, vorzugsweise um Ethylacrylat,
c) 0,5 % bis 25 % des mindestens einen Monomers, das mindestens eine hydrophobe Gruppe besitzt,
d) 0,1 % bis 10 % nach Gewicht mindestens eines Polyglycerins der Formel (I), 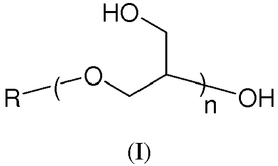
wobei n für eine beliebige ganze Zahl oder Dezimalzahl steht, die größer als 1 und kleiner oder gleich 10 ist, wobei sie den mittleren Polymerisationsgrad bezeichnet; R für Wasserstoff, eine Estergruppe, die durch eine Alkylgruppe mit 8 bis 22 Kohlenstoffatomen funktionalisiert ist, oder eine Alkylgruppe mit 8 bis 22 Kohlenstoffatomen steht, und zwar vorzugsweise für eine Alkylgruppe mit 8 bis 22 Kohlenstoffatomen,
wobei die Summe der Prozentanteile a), b), c) und d) gleich 100 % ist.

6. Verfahren nach einem der Ansprüche 1 bis 5, wobei R' eine hydrophobe Gruppe bezeichnet, die zwischen 12 und 36 Kohlenstoffatome aufweist.

7. Verfahren nach einem der Ansprüche 1 bis 6, **dadurch gekennzeichnet, dass** das assoziative Verdickungsmittel ein gewichtsmittleres Molekulargewicht im Bereich von 20.000 g/mol bis 1.000.000 g/mol aufweist, gemäß einer Messung mittels GPC.

8. Assoziatives Verdickungsmittel, wie es mittels des Verfahrens nach einem der Ansprüche 1 bis 7 erhalten wird.

9. Verwendung des Verdickungsmittels nach Anspruch 8 als Mittel zur Verbesserung der offenen Zeit einer wässrigen Formulierung oder eines Klebstoffs, wobei es sich bei der wässrigen Formulierung vorzugsweise um ein wässriges Anstrichmittel, einen Putz oder ein Beschichtungsmittel handelt.

10. Wässrige Formulierung oder Klebstoff, die/der das Verdickungsmittel nach Anspruch 9 enthält, wobei es sich bei der wässrigen Formulierung vorzugsweise um ein wässriges Anstrichmittel, einen Putz oder ein Beschichtungsmittel handelt.

11. Verwendung des Polyglycerins der Formel (I) als Polymerisationstensid.

## Claims

1. A method for manufacturing an associative thickening agent by polymerisation, in an aqueous dispersion, in the presence of surfactants other than the compounds listed in point d) :
a) of at least one monomer which is (meth)acrylic acid, preferentially methacrylic acid,
b) of at least one monomer which is an ester of (meth)acrylic acid, preferentially ethyl acrylate,
c) of at least one monomer with a hydrophobic group, of general formula R - (EO)ₚ - (PO)_{q} - R' with:
- p and q designate integers of less than or equal to 150 of at least one of which is non zero, with preferentially q = 0 and 0 < p < 80,
- EO and PO designate respectively ethylene oxide and propylene oxide,
- R designates a polymerisable function, and preferentially the methacrylate or methacrylurethane function,
- R' designates a hydrophobic group with at least 6 and at most 36 carbon atoms, **characterised in that** d) at least one polyglycerol of formula (I) is used during said polymerisation 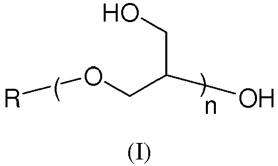
where n is an integer or a decimal number greater than 1 and equal or lower than 10 and designates the average degree of polymerization; R designates hydrogen, or an ester group functionalised by an alkyl group with 8 to 22 carbon atoms, or an alkyl group with 8 to 22 carbon atoms, and preferentially an alkyl group with 8 to 22 carbon atoms.

2. A method according to claim 1 **characterised in that** a first step of introducing into water compounds d) and said surfactants other than the compounds d) is accomplished, followed by a second step of increasing the temperature of the medium, followed by a third step of introducing polymerisation initiators, and then monomers, optionally added in combination with water and surfactants other than compounds d).

3. A method according to one of claims 1 or 2 **characterised in that** the surfactants other than compounds d) are chosen from among the anionic surfactants, and preferentially from among sodium dodecyl sulphate, dioctyl sodium sulfosuccinate, sodium dodecylbenzenesulfonate, non-ionic surfactants, and preferentially ethers of fatty alcohols and of polyoxyethylene glycol, esters of polyoxyethylene glycol and mixtures of these surfactants.

4. A method according to one of claims 1 to 3 **characterised in that** the mass % of surfactants other than d)/polymer is comprised between 1% and 5%.

5. A method according to one of claims 1 to 4 **characterised in that** said polymerisation uses, as a % by weight, compared to the total weight of said associative thickening agent:
a) from 20% to 60% by weight of at least one monomer which is (meth)acrylic acid, and preferentially methacrylic acid,
b) from 40% to 80% of at least one monomer which is an ester of (meth)acrylic acid, and preferentially ethyl acrylate,
c) from 0.5% to 25% of said at least one monomer having a hydrophobic group,
d) from 0.1% to 10% by weight of at least one polyglycerol of formula (I), 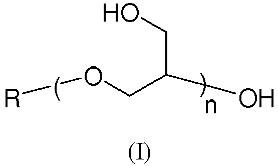
where n is an integer or a decimal number greater than 1 and equal or lower than 10 and designates the average degree of polymerization; R designates hydrogen, or an ester group functionalised by an alkyl group with 8 to 22 carbon atoms, or an alkyl group with 8 to 22 carbon atoms, and preferentially an alkyl group with 8 to 22 carbon atoms,
the sum of the percentages a), b), c) and d) being equal to 100%.

6. A method according to one of claims 1 to 5 according to which R' designates a hydrophobic group comprising between 12 and 36 carbon atoms.

7. A method according to one of claims 1 to 6 **characterised in that** the said associative thickening agent has an average molecular mass by weight comprised between 20,000 g/mole and 1,000,000 g/mole, as measured by GPC.

8. An associative thickening agent, as obtained by the method according to one of the claims 1 to 7.

9. Use of the thickening agent according to claim 8, as an agent to improve the open time of an aqueous formulation or an adhesive, said aqueous formulation being preferentially an aqueous paint, a render coating or a filler.

10. An aqueous formulation or adhesive containing the thickening agent according to claim 9, said aqueous formulation being preferentially an aqueous paint, a render coating or a filler.

11. Use of polyglycerol of formula (I) as surfactant of polymerization.
